# EUROPEAN PATENT SPECIFICATION

(11) **EP 3 958 114 B1**
(45) Date of publication and mention of the grant of the patent: **24.04.2024**
(21) Application number: 20382759.7
(22) Date of filing: 19.08.2020
(51) Int. Cl.: G06F 8/60

(54) **SOFTWARE ELIGIBILITY**
SOFTWARE-EIGNUNG
ADMISSIBILITÉ DE LOGICIEL

(43) Date of publication of application: 23.02.2022
(73) Proprietor: Giesecke+Devrient Mobile Security Germany GmbH, 81677 München (DE)
(72) Inventor: AMOROS, LUIS MIGUEL, 08820 EL PRAT DE LLOBREGAT (ES); BRAVO, HECTOR, 08820 EL PRAT DE LLOBREGAT (ES); DE ANTONIO, PABLO, 08820 EL PRAT DE LLOBREGAT (ES); GIFRE, CLARA, 08820 EL PRAT DE LLOBREGAT (ES); PATINO, DAVID, 08820 EL PRAT DE LLOBREGAT (ES)
(74) Representative: LKGLOBAL Lorenz & Kopf Patentanwalt Attorney at Law PartG mbB

(56) References cited:
- US-A1- 2011 225 575
- US-A1- 2016 162 275

## Description

The present invention is directed towards a method for making sure that a piece of software, such as a new software component or a new operating system, or part of it, to be installed on an end device is compatible with an existing software or operating system and especially with the underlying hardware structure. It therefore is an advantage of the present invention that new software components can be evaluated before installing them, thus preventing incompatible software components from being installed on an end device which would harm or even destroy the same. Furthermore, the present invention is directed towards a system arrangement implemented in accordance with the suggested method along with a computer program product comprising control instructions for implementing the suggested method.

DE 10 2014 220 616 A1 discloses an operating system for chip cards. This publication discusses a boot loader, amongst others, but is silent about the main aspects of the present invention.

WO 2002/037 203 A2 teaches a method for updating software components on a mobile end device. This publication is also directed towards a boot loader and addresses specific partitions on which an operating system is stored.

DE 10 2015 207 900 A1 teaches an update of operating system components, wherein electronic components within buildings are addressed.

US 2016/0162275 A1 discloses an Application Checker which identifies and isolates incompatible applications on a mobile device during a software platform update.

US 2011/0225575 A1 discloses a patch analysis computer which retrieves from a website, metadata describing one or more patch files to be used to change software in one or more target computers.

According to the known art, software installed on an end device, such as an operating system, need to be updated and/or exchanged from time to time. Consequently, new piece of software, a new software component or a new operating system has to be provided in part or as a whole. Using those new software components, a currently installed software or operating system is updated or completely exchanged. However, problems occur in case the newly provided software components or operating system is not compatible with the software system currently installed on the related end device.

There is a considerable risk that the new software components can indeed be installed on a device but are nevertheless not compatible with existing software, such as the operating system of that device. In such a case the incompatibility is not recognized before deployment and, consequently, the newly installed software components may damage the underlying end device. Such a damage might occur in case major components of the currently installed software system are deleted and exchanged. As major software components are then installed, which cannot be operated due to incompatibilities, the end device is damaged in its entireness. Often, an update cannot be undone because a rollback is no longer possible. In case the newly installed software components cannot be operated, interfaces are no longer available and processing steps cannot be performed by the end device. This means that the end device is out of order and no new software components can be installed which otherwise would remedy the defect.

According to the known art, the available testing methods are typically performed manually and do not respond to large amounts of available end devices. Consequently, such methods are not performed using automated mechanisms which can be accomplished over a network. Moreover, such methods are not available at run-time and are prone to errors as they involve significant technical effort to be performed by human operators.

Consequently, it is an object of the present invention to provide an improved method for ensuring eligibility of a piece of software to be installed on an end device, which can be performed automatically and at little technical effort. One further object is that such a method can operate at real-time and prevent incompatible software components from being installed. It is a further object of the present invention to provide a system arrangement being implemented in accordance with the suggested method. Likewise, it is an object of the present invention to provide a computer program product comprising control instructions for performing the suggested method steps and operating the suggested system arrangement.

The object is solved by methods and means according to the independent claims. Further advantages and preferred embodiments of the invention are provided by the dependent claims.

Accordingly, a method for ensuring eligibility of a piece of software to be installed on an end device is suggested. The suggested method comprises the steps of creating a requirements specification by evaluating the new piece of software with respect to deployment requirements of the end device, transmitting said requirements specification to the end device, detecting actual deployment requirements on the end device and comparing the transmitted requirements specification with the detected actual deployment requirements as well as deploying the new piece of software on the end device in case it is determined that the requirements specification complies with the actual deployment requirements.

Within the context of the present invention, the term piece of software refers to any software item or entity that can be installed on an operable end device to update, replace, supplement, or patch a software running on that end device or add new functionality to it. In this sense, a piece of software may be a new operating system, a part of a new operating system, a library, an application, a hardware driver or hardware abstraction layer, a middleware or the like.

A new piece of software is eligible if it, after installing it on the end device, does not adversely affect to operability of the end device and the software already installed thereon, particularly the operability of the end device's operating system.

The new piece of software has requirements that mainly relate to hardware and resource usage, but also provides capabilities that mainly relate to applications and user data.

The end device has requirements that mainly relate to its applications and user data and that should comply with the capabilities provided by the new piece of software. The end device also has capabilities that mainly relate to its hardware and available resources and that must comply with the requirements of the new piece of software.

In general, the method can at least in part be performed by a so-called embedded Universal Integrated Circuit Card or by a Universal Integrated Circuit Card.

The present invention suggests a method which is part of an environment that allows for deployment of a piece of software, such as a software loader or an update agent. The software loader or update agent allows for deployment of a piece of software, such as compatible software components or, especially, of a new operating system that can be installed as a whole or in part.

The suggested method ensures eligibility by checking whether a piece of software is compatible or not with the technical environment it is put into. Compatibility refers to any software or the operating system already installed on the end device as well as the end device and its hardware components. The present invention is also directed towards the evaluation of provided hardware components as well. In this sense, compatibility has to be considered not only for single hardware components but rather for the variety of hardware components acting together within the end device.

The creation of a requirements and capabilities specification is performed by analyzing the image of the new piece of software and/or the new piece of software as such. This may involve steps such as reading out the image size and/or the provided instructions. Moreover, the new piece of software may require specific hardware components or specific combinations of hardware components. A file indicating such requirements specifications may be attached to or be a part of the image of the new piece of software and may be read out automatically. It is also possible to perform specific tests on the new piece of software to determine its requirements. The resulting requirements may be codified in a file that specifies respective parameters and values. The step of creating a requirements specification can be performed remotely over a network and the resulting file can be transmitted to the end device. Communication with the end device is typically performed using a wireless data interface. In case the end device is a smartphone, a mobile telecommunication network is used. According to the present invention, it is possible to provide the requirements specification first and transmit the image of the new piece of software only in case the requirements specification is positively evaluated or rather to immediately transmit both the requirements specification along with the image of the new piece of software. In case only a limited bandwidth is available, the requirements specification may be sent first, which prevents the system from sending the image of the new piece of software in case the requirements specification is rejected.

Moreover, the creation of the requirements specification can be formed by the end device itself and the transmission of the requirements specification may then be a device internal process providing the respective information from a memory to a secure element being arranged or integrated within the end device. Consequently, the step of transmitting said requirements specification to the end device involves communicating data from one component to another within the end device according to an aspect of the present invention.

In a further step, detecting actual deployment requirements on the end device is performed, which means that software requirements are tested on the end device or at least read out. The deployment requirements may address a memory space, a processor type or the provision of certain interfaces. The deployment requirements comprise those specifications which need to be fulfilled for operating the new piece of software.

Once the actual deployment requirements are available along with the requirements specification regarding the image of the new piece of software, both specifications can be compared and it can be detected accordingly whether the requirements specification complies with the actual deployment requirements. For doing so, a database or a table indicating deployment requirements may be provided. Then, an evaluation metric which indicates when a new piece of software is compatible with the software to be updated or replaced is provided.

In case it is determined that the image of the new piece of software is compatible with the operating system of the end device, the new piece of software is deployed. Deployment of the new piece of software implies that the image of the new piece of software is made available to the end device and the operating system of the end device. This likewise can be performed by transmitting the image of the new piece of software to the end device. Transmitting the requirements specification and the image file may be accomplished using two different interfaces. For instance, the requirements specification may be provided wirelessly by a so-called Over-the-Air (OTA) Interface and the image may be provided using a Wired Communication Interface. This considers the fact that the requirements specification is typically smaller in size than the image of the new piece of software. Of course, in any case, the same interface can be used. It may also be of advantage to first evaluate the requirements specification and to perform the download of the image of the new piece of software later on. In this example the image of the new piece of software can be downloaded at nighttime when the user typically does not require a fully functional end device. Hence, the requirements specification can be provided at a time when user feedback may be required and downloading and deploying the image of the new piece of software can be performed later on.

According to the present invention it can be defined if the requirements specification complies with the actual deployment requirements. A set of rules indicating compatibility and functionality may be provided and can likewise be specified according to the needs of the new piece of software. Such a set of rules may furthermore determine which hardware components are available within the end device and provide specifications of the supported functionality. It is also possible to perform real-time tests and check if the provided instructions of the new piece of software are able to handle the underlying hardware infrastructure.

According to an aspect of the present invention, the requirements specification may comprise any of information regarding a version of the image of the new piece of software, a memory requirement, a memory map, a data format version, a hardware information and/or deployment information. In case the new piece of software relates to a Java Card operating system, the requirements specification may comprise information regarding java card packages. Thanks to the requirements specification, hardware and software components can be described and such information allows the end device to fully determine the compatibility of the provided content. In further method steps it is of advantage to adapt specifications of the end device such that the new piece of software is made compatible with the end device, the installed software and hardware. Hence, memory may be deallocated or additional software may be installed.

Transmitting said requirements specification is performed along with transmitting the image of the new piece of software to the end device. This provides the advantage that the end device can perform tests on the image of the new piece of software as it is provided along with the requirements specification. Moreover, the requirements specification along with the image of the new piece of software can be compressed resulting in a single file. In general, it is also possible to separately transmit the requirements specification and the image of the new piece of software.

According to a further aspect of the present invention, transmitting said requirements specification is performed using a file, the file comprising the requirements specification, a signature and/or the image of the new piece of software. This provides the advantage that the signature can be used to secure either the requirements specification or the image of the new piece of software or both. Moreover, a single file can be provided which encodesall necessary information for installing the new piece of software.

According to a further aspect of the present invention, the actual deployment requirements are detected by a detection software that is running on the end device and which, preferably, is integrated into the operating system of the end device or forms a module or function thereof. This provides the advantage that the actual deployment requirements can be detected at runtime and the operating system itself may use own settings to evaluate the provided image. The actual deployment requirements are typically detected using the underlying hardware infrastructure of the end device.

According to a further aspect of the present invention, deploying the image of the new piece of software comprises unpacking the image file, checking its integrity, amending currently installed software, updating currently installed software, exchanging currently installed software, deleting currently installed software and/or installing the new piece of software on the end device. This provides the advantage that all functionality being required to deploy the new piece of software is made available and the image can be unpacked such that the new piece of software is ready for deployment. Likewise, security features can be implemented. In further steps, the software to be replaced or updated is uninstalled and the new piece of software is installed.

According to a further aspect of the present invention, the requirements specification complies with the actual deployment requirements in case the new piece of software is compatible with the operating system and/or hardware of the end device. This provides the advantage that compliance is achieved such that both software and hardware components being available on the end device are compatible. A specific set of rules may be provided indicating compliance.

According to a further aspect of the present invention, compliance is evaluated using a table indicating compatibility information. This provides the advantage that the manufacturer of the end device or the currently installed software may provide compatibility information listing all compatible software and hardware components. To achieve compliance, the table has to be checked and the new piece of software has to be compared with currently installed components. A table may be provided using a database or, in general, a data file.

According to a further aspect of the present invention, in case the requirements specification does not comply with the actual deployment requirements, the method is terminated because the new piece of software is determined to not be eligible. This provides the advantage that the newly introduced software components are not installed but rather the method breaks up and prevents installing incompatible software. Further actions may then be required, such as deleting already transmitted data and informing a user.

According to a further aspect of the present invention, the end device is a mobile phone, a wearable, a portable end device, a tablet computer or notebook and/or comprises a Tamper Resistant Element, in any of its flavors or form factors. This provides the advantage that a smartphone or a wearable can be present forming the end device and specific hardware which operates at least a part of the suggested method steps and provides a memory for the piece of software is provided.

According to a further aspect of the present invention, the piece of software to be installed on the end device can be a new operating system, a part thereof, or a new operating system image that is installed on the end device in order to update, replace or patch the existing operating system of the end device.

According to a further aspect of the present invention, the suggested method can be performed using several types of hardware. The method can be operated automatically and, consequently, the underlying hardware infrastructure can be detected and evaluated at runtime.

According to a further aspect of the present invention, the step of creating the requirements specification particularly includes determining information about capabilities the new piece of software provides to the end device and/or about requirements of the new piece of software for the end device. In turn, the step of detecting the actual deployment requirements particularly includes determining information about capabilities the end device provides to the new piece of software and/or about requirements of the end device for the new piece of software.

The software currently installed on the end device comprises an upper software layer and a lower software layer. In relation to the piece of software to be installed on the end device, the upper software layer requires the new piece of software to provide certain capabilities, while the new piece of software requires the lower software layer to provide certain capabilities. Within this software setting, the new piece of software to be installed is eligible, if it provides all capabilities required by the upper software layer and if the lower software layer provides all capabilities the piece of software requires from it.

The present invention therefore ensures eligibility of a piece of software within a software arrangement comprising an upper and lower software layer in relation to the new piece of software, in that the step of creating the requirements specification includes determining information about capabilities that the new piece of software provides to the upper software layer and/or information about the new piece of software's requirements for the lower software layer. In turn, the step of detecting the actual deployment requirements includes determining information about capabilities the lower software layer provides to the new piece of software and/or information about the upper software layer's requirements for the new piece of software.

The object of the present invention is also solved by a system arrangement for ensuring eligibility of at least a part of a piece of software to be installed on an end device, comprising a manifest entity being arranged to create a requirements specification by evaluating an image of a new piece of software to be installed on the end device regarding deployment requirements, an interface entity being arranged to transmit said requirements specification to the end device, a detection entity being arranged to detect actual deployment requirements on the end device and compare the transmitted requirements specification with the detected actual deployment requirements, and a deployment entity being arranged to deploy the image of the new piece of software on the end device in case it is determined that the requirements specification complies with the actual deployment requirements.

Preferably, the entities of the systems arrangement according to the present invention are realized by one or more computer program products, while the detection entity, preferably, is realized by a detection software installed on the end device. That is, the computer program product forming the detection entity is installed on the end device and, when executed, detects actual deployment requirements on the end device as part of the method according to the present invention.

The person skilled in the art recognizes that that system arrangement as currently suggested may comprise further components such as network components or general hardware components being typically available on end devices. The creation of a requirements specification may, for instance, be performed by a server and the requirements specification may be distributed over a computer network.

According to the present invention, it is of special advantage that the suggested method provides steps which can be carried out by structural features of the system arrangement including a detection software of the end device. Moreover, the system arrangement comprises structural features which provide functionality in accordance with the suggested method steps. The suggested method is able to operate the system arrangement and the system arrangement is able to perform respective method steps.

The object is also solved by a computer program product being arranged to provide instructions to detect actual deployment requirements on an end device and by that implementing the detection step of the method according to the present invention when it is executed on a processor of the end device.

Technical effects and advantages of the present invention are provided in more detail using the accompanying figures, which show:
Fig. 1: the suggested system arrangement and provided functionality according to an aspect of the present invention;
Fig. 2: a flowchart depicting one aspect of the suggested method for ensuring an eligibility;
Fig. 3: a schematic flowchart demonstrating the method for ensuring an eligibility of at least a part of an operating system according to a further aspect of the present invention; and
Fig. 4: a hierarchical software structure on a Tamper Resistant Element that illustrates the present invention.

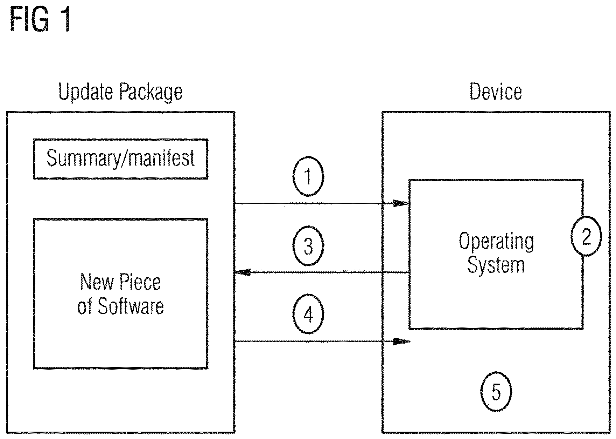

Fig. 1 shows on the left side an update package and on the right side an end device. In step 1, the new piece of software and an operating summary, manifest or descriptor is sent from the update package to the device. In step 2, the current operating system of the end device checks the summary, manifest or descriptor in order to check compatibility of the new piece of software with the software currently installed on the end device and its operating system. In step 3, the current operating system sends a confirming o.k. message or a refusing not o.k. message, respectively indicating compatibility or incompatibility. In step 4, if the response was o.k., the new piece of software, preferably being an operating system or a part or patch thereof, is sent to the device. In step 5, the device is finally updated with the new piece of software. The main advantages of such a procedure and system are that checking compatibility avoids locking the device. If the current operating system does not accept the software update, unnecessary data transmission of the new piece of software is prevented.

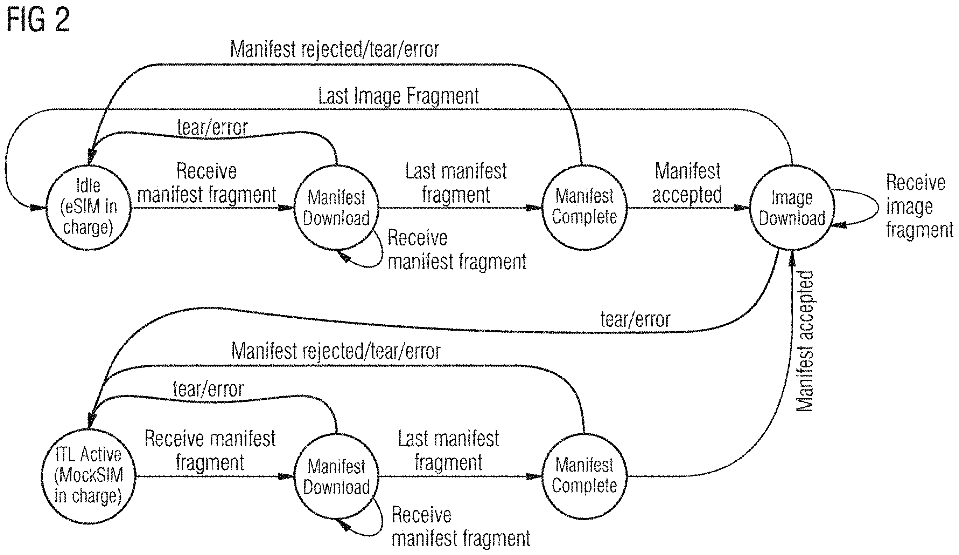

Fig. 2 shows a flowchart depicting an end device comprising a Tamper Resistant Element. The suggested method may be provided in the form of a software loader or update agent that allows for deployment of a piece of software.

According to the embodiment of Fig. 2, an operating system, for instance of a smart card, has to be exchanged or amended by means of a new piece of software. Typically, software such as an operating system requires updates from time to time, for instance by security patches, and the new instruction set provided by the new piece of software may not be compatible with existing software or hardware structures of the end device. Consequently, problems may occur that cause software or hardware components of the end device to be inoperable.

Regarding the investigations whether new software components, namely new operating system components, are compatible or not, according to the state of the art, manual processes are performed. However, such processes are labor-intensive, may be prone to errors and do not consider circumstances in individual end devices affecting compatibility. Hence, such issues result in high costs and further errors may occur once the hardware is operated or existing applications on the smart card are operated.

A further problem arises as once new operating system components are installed, it may not be possible to reverse the update process as the smart card may not be functional anymore. Accordingly, the issuer would have to withdraw such smart cards, which again results in high costs and effort.

The present invention suggests that before a new piece of software such as new operating system components are delivered, a so-called descriptor is sent to the device, which allows the device to evaluate software components to be newly installed on its own. Such a descriptor or summary contains meta data describing the new software or operating system components to be delivered to and installed on the device. Consequently, the device can compare existing structures with functionality being provided by the new software or operating system components.

In a further step, the device can then suggest whether such an update is to be allowed or denied. In this way only compatible software components are installed and in case an update is denied no further software components are delivered and installed.

This provides the advantage that compatibility problems are prevented even before delivering new software components to the device. Hence, there is a decrease in bandwidth requirements, storage space and processing time required. The main advantage, however, is that software components potentially destroying the smart card or resulting in incompatibilities and inoperability are prevented from being installed on the device. Summarizing this issue, the present invention has the advantage that an update of software components, particularly of operating system components can be performed without risking incompatibilities.

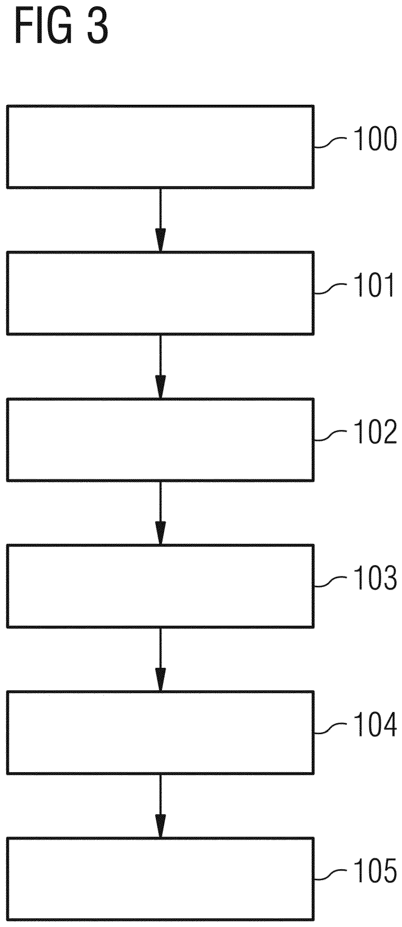

Fig. 3 shows a flowchart depicting a method for ensuring eligibility of a piece of software to be installed on an end device, comprising the steps of creating 100 a requirements specification by evaluating 101 an image of a new piece of software to be installed on the end device regarding deployment requirements of the end device. The requirements specification is created 100 by determining information about capabilities the new piece of software provides to the end device and about the new piece of software's requirements for the end device. Next, said requirements specification is transmitted 102 to the end device and actual deployment requirements are detected 103 on and by the end device. The actual deployment requirements are detected 103 by determining information about capabilities the end device provides to the new piece of software and about requirements of the end device for the new piece of software. Next, the transmitted 102 requirements specification is compared 104 with the detected 103 actual deployment requirements and the image of the new piece of software is deployed 105 on the end device in case it is determined that the requirements specification complies with the actual deployment requirements.

The step of creating 100 the requirements specification includes determining information about capabilities the new piece of software provides to the end device and about the new piece of software's requirements of for the end device, while the step of detecting 103 the actual deployment requirements includes determining information about capabilities the end device provides to the new piece of software and about the end device's requirements for the new piece of software.

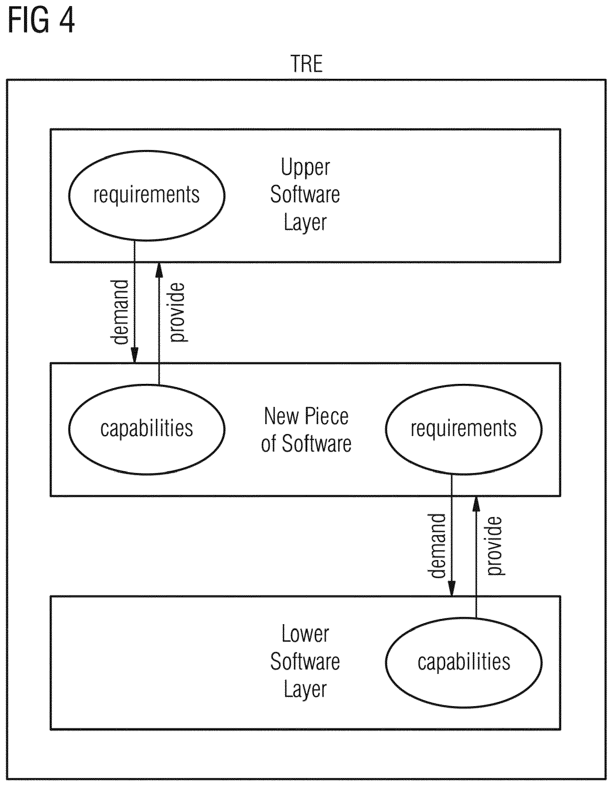

Fig. 4 illustrates a hierarchical software structure installed on a Tamper Resistant Element (TRE) of an end device with which a new piece of software to be installed on the TRE needs to comply in order to not harm or destroy the operability of the TRE and the end device. In relation to a new piece of software the hierarchical software structure of the TRE comprises an upper software layer whose operation depends, inter alia, on the new piece of software and a lower software layer on which, inter alia, the operation of the new piece of software depends.

The upper software layer may for instance comprises other software components currently installed on the TRE, be it applications or system functions, that require functions and capabilities provided by the new piece of software for proper operation. Likewise, the lower software layer may for instance comprises other software components currently installed on the TRE or hardware resources of the TPE and the end device, be it applications, system functions or hardware access, that provide functions and capabilities to the new piece of software to thereby ensure proper operation of the new piece of software.

Because of the fact that the new piece of software exhibits a specific functional relationship with both the upper and the lower software layer, eligibility of the new piece of software consists of two separate aspects, namely, on the one side, assessing eligibility of the new piece of software in terms of its functional relationship to the upper software layer and, on the other side, assessing eligibility of the new piece of software in terms of its functional relationship to the lower software layer.

Generally, within the context of the present invention, a new piece of software may be any software package, patch or software entity that is installed on the end device after its delivery to the end user, e.g. in order to update or supplement functionality or improve the operation of the end device in any regard. A new piece of software may particularly be a new operating system that completely replaces, updates, supplements, or improves an existing operating system, a new or improved library, a new or improved hardware abstraction layer (HAL), a new or improved middleware, a new or improved application or the like. According to the embodiment illustrated in Fig. 4, a new piece of software is to be installed on the TRE in order to replace, update or patch an existing software component of the TRE. The software components of the TRE that represent the upper software layer and lower software layer in relation to the new piece of software are respectively identified within the TPE. In order to identify the lower software layer, all software components of the TRE are identified that provide capabilities for the new piece of software, such as a specific hardware architecture, a specific hardware derivative, specific peripherals, a specific minimum of available memory, specific software interfaces, specific software functionality, or the like. Likewise, in order to identify the upper software layer, all software components of the TRE are identified that require capabilities of the new piece of software, such as specific interfaces, specific functionality, or the like.

Upon ensuring eligibility of the new piece of software it is, on the one hand, assessed whether or not the lower software layer provides specific capabilities to the new piece of software and by that satisfies specific requirements demanded by the new piece of software. On the other hand it is also assessed whether or not the new piece of software provides specific capabilities to the upper software layer and by that satisfies specific requirements demanded by the upper software layer. Consequently, the new piece of software is eligible if both all capabilities required by the new piece of software are provided by the lower software layer and all capabilities required by the upper software layer are provided by the new piece of software. In that case the new piece of software complies with the requirements of the upper software layer and the lower software layer complies with the requirements of the new piece of software.

Within the context of Fig. 4, creating the requirements specification thus comprises determining information about capabilities the new piece of software provides to the upper software layer and about the new piece of software's requirements of for the lower software layer. Detecting the actual deployment requirements thus comprises determining information about capabilities the lower software layer provides to the new piece of software and about the upper software layer's requirements for the new piece of software.

The person skilled in the art recognizes that the aforementioned method steps and technical concepts may be performed or arranged iteratively and/or in a different order or structure. Furthermore, the method steps may comprise further sub-steps. For instance, the evaluation of the new operating system image can be performed in parallel with the detection of the actual deployment requirements.

## Claims

1. A method for ensuring eligibility of a piece of software to be installed on an end device, comprising the steps:
- creating (100) a requirements specification by evaluating (101) a new piece of software regarding deployment requirements of the end device;
- transmitting (102) said requirements specification to the end device;
- detecting (103) actual deployment requirements on the end device and comparing (104) the transmitted (102) requirements specification with the detected (103) actual deployment requirements; and - deploying (105) the new piece of software on the end device in case it is determined that the requirements specification complies with the actual deployment requirements, **characterized in that** a software currently installed on the end device comprises an upper software layer and a lower software layer and
- creating (100) the requirements specification comprises determining information about capabilities the new piece of software provides to the upper software layer and/or about requirements of the new piece of software for the lower software layer; and
- detecting (103) the actual deployment requirements comprises determining information about capabilities the lower software layer provides to the new piece of software and/or about requirements of the upper software layer for the new piece of software,
- wherein transmitting (102) said requirements specification is performed along with transmitting the new piece of software to the end device.

2. The method according to claim 1, **characterized in that**
creating (100) the requirements specification comprises determining information about capabilities the new piece of software provides to the end device and/or about requirements of the new piece of software for the end device; and
detecting (103) the actual deployment requirements comprises determining information about capabilities the end device provides to the new piece of software and/or about requirements of the end device for the new piece of software.

3. The method according to claim 1 or 2, **characterized in that** creating (100) the requirements specification comprises providing information about the new piece of software, and/or regarding java card packages in case the new piece of software relates to a Java Card operating system, and/or a version of the new piece of software, or a memory requirement, and/or a memory map, and/or a data format version, and/or a hardware information and/or deployment information.

4. The method according to any one of the preceding claims,
**characterized in that** the actual deployment requirements are detected (103) by a detection software installed on the end device wherein, preferably, the detection software is integrated into the operating system of the end device.

5. The method according to any one of the preceding claims,
**characterized in that** deploying (105) the new piece of software comprises unpacking an image file of the new piece of software, checking its integrity, amending currently installed software components, updating currently installed software components, exchanging currently installed software components, deleting currently installed software components and/or installing the new piece of software on the end device.

6. The method according to any one of the preceding claims,
**characterized in that** the requirements specification complies with the actual deployment requirements in case the new operating system is compatible with the currently installed operating system and/ or hardware of the end device.

7. The method according to any one of the preceding claims,
**characterized in that** compliance of the requirements specification with the actual deployment requirements is determined by evaluating a table indicating compatibility information.

8. The method according to any one of the preceding claims,
**characterized in that** the method is terminated in case the requirements specification does not comply with the actual deployment requirements.

9. The method according to any one of the preceding claims,
**characterized in that** eligibility of a piece of software is ensured that is to be installed on a mobile phone, a wearable, a portable end device, a tablet computer or notebook and/or on an end device comprising a Tamper Resistant Element.

10. The method according to any one of the preceding claims,
**characterized in that** a new operating system or operating system image is installed on the end device as the new piece of software.

11. A system arrangement for ensuring eligibility of a piece of software to be installed on an end device, comprising:
- an entity being arranged to create (100) a requirements specification by evaluating (101) a new piece of software regarding deployment requirements of the end device;
- an interface entity being arranged to transmit (102) said requirements specification to the end device;
- a detection entity being arranged to detect (103) actual deployment requirements on the end device and to compare (104) the transmitted (102) requirements specification with the detected (103) actual deployment requirements; and
- a deployment entity being arranged to deploy (105) the new piece of software on the end device in case it is determined that the requirements specification complies with the actual deployment requirements,
**characterized in that** a software currently installed on the end device comprises an upper software layer and a lower software layer and
- the entity being arranged to create (100) a requirements specification is configured to determine information about capabilities the new piece of software provides to the upper software layer and/or about requirements of the new piece of software for the lower software layer; and
- the detection entity is configured to determine detecting (103) the actual deployment requirements comprises determining information about capabilities the lower software layer provides to the new piece of software and/or about requirements of the upper software layer for the new piece of software,
wherein the interface entity being arranged to perform transmitting (102) of said requirements specification along with transmitting of the new piece of software to the end device.

12. System arrangement according to claim 11, **characterized in that** the entities of the systems arrangement are realized by one or more computer program products, whereas the detection entity preferably is realized by a detection software installed on the end device.

13. A computer program product being arranged to detect actual deployment requirements on an end device as the detection step of a method according to any one of the preceding claims 1 to 10, when being installed on and executed by the end device.

## Patentansprüche

1. Verfahren zum Sicherstellen einer Eignung eines Softwareteils, der auf einem Endgerät installiert werden soll, umfassend die Schritte:
- Erzeugen (100) einer Anforderungsspezifikation durch Bewerten (101) eines neuen Softwareteils hinsichtlich Einsatzanforderungen des Endgerätes;
- Übertragen (102) der Anforderungsspezifikation an das Endgerät,
- Erfassen (103) von tatsächlichen Einsatzanforderungen auf dem Endgerät und Vergleichen (104) der übertragenen (102) Anforderungsspezifikation mit den erfassten (103) tatsächlichen Einsatzanforderungen; und
- Einsetzen (105) des neuen Softwareteils auf dem Endgerät, falls festgestellt wird, dass die Anforderungsspezifikation die tatsächlichen Einsatzanforderungen erfüllt, **dadurch gekennzeichnet, dass** eine derzeit auf dem Endgerät installierte Software eine obere Softwareschicht und eine untere Softwareschicht umfasst und
- das Erzeugen (100) der Anforderungsspezifikation das Bestimmen von Informationen über Fähigkeiten, die der neue Softwareteil an die obere Softwareschicht bereitstellt, und/oder über Anforderungen des neuen Softwareteils für die untere Softwareschicht umfasst; und
- das Erfassen (103) der tatsächlichen Einsatzanforderungen das Bestimmen von Informationen über Fähigkeiten, die die untere Softwareschicht dem neuen Softwareteil bereitstellt, und/oder über Anforderungen der oberen Softwareschicht für das neue Softwareteil umfasst;
- wobei das Übertragen (102) der Anforderungsspezifikation zusammen mit dem Übertragen des neuen Softwareteils an das Endgerät durchgeführt wird.

2. Verfahren nach Anspruch 1, **dadurch gekennzeichnet, dass**
das Erzeugen (100) der Anforderungsspezifikation das Bestimmen von Informationen über Fähigkeiten, die der neue Softwareteil dem Endgerät bereitstellt, und/oder über Anforderungen des neuen Softwareteils für das Endgerät umfasst; und
das Erfassen (103) der tatsächlichen Einsatzanforderungen das Bestimmen von Informationen über Fähigkeiten, die das Endgerät an den neuen Softwareteil bereitstellt, und/oder über Anforderungen des Endgeräts an den neuen Softwareteil umfasst.

3. Verfahren nach Anspruch 1 oder 2, **dadurch gekennzeichnet, dass** das Erzeugen (100) der Anforderungsspezifikation das Bereitstellen von Informationen über den neuen Softwareteil, und/oder hinsichtlich Java-Card-Pakete, falls sich der neue Softwareteil auf ein Java-Card-Betriebssystem bezieht, und/oder eine Version des neuen Softwareteils oder eine Speicheranforderung und/oder eine Speicherkarte und/oder über eine Datenformatversion und/oder über eine Hardware-Information und/oder über Einsatzinformationen umfasst.

4. Verfahren nach einem der vorhergehenden Ansprüche,
**dadurch gekennzeichnet, dass** die tatsächlichen Einsatzanforderungen durch eine auf dem Endgerät installierte Erfassungssoftware erfasst werden (103), wobei die Erkennungssoftware vorzugsweise in das Betriebssystem des Endgerätes integriert ist.

5. Verfahren nach einem der vorhergehenden Ansprüche,
**dadurch gekennzeichnet, dass** das Einsetzen (105) des neuen Softwareteils das Entpacken einer Abbild-Datei des neuen Softwareteils, das Überprüfen ihrer Integrität, das Ändern von aktuell installierten Softwarekomponenten, das Aktualisieren von aktuell installierten Softwarekomponenten, das Austauschen von aktuell installierten Softwarekomponenten, das Löschen von aktuell installierten Softwarekomponenten und/oder das Installieren des neuen Softwareteils auf dem Endgerät umfasst.

6. Verfahren nach einem der vorhergehenden Ansprüche,
**dadurch gekennzeichnet, dass** die Anforderungsspezifikation die tatsächlichen Einsatzanforderungen erfüllt, falls das neue Betriebssystem mit dem aktuell installierten Betriebssystem und/oder der Hardware des Endgerätes kompatibel ist.

7. Verfahren nach einem der vorangehenden Ansprüche,
**dadurch gekennzeichnet, dass** die Erfüllung der Anforderungsspezifikation mit den tatsächlichen Einsatzanforderungen durch Bewerten einer Tabelle bestimmt wird, die Kompatibilitätsinformationen anzeigt.

8. Verfahren nach einem der vorangehenden Ansprüche,
**dadurch gekennzeichnet, dass** das Verfahren abgebrochen wird, falls die Anforderungsspezifikation nicht die tatsächlichen Einsatzanforderungen erfüllt.

9. Verfahren nach einem der vorangehenden Ansprüche,
**dadurch gekennzeichnet, dass** eine Eignung eines Softwareteils sichergestellt wird, der auf einem Mobiltelefon, einem tragbaren Gegenstand, einem tragbaren Endgerät, einem Tablet-Computer oder Notebook und/oder auf einem Endgerät mit einem manipulationssicheren Element installiert werden soll.

10. Verfahren nach einem der vorhergehenden Ansprüche,
**dadurch gekennzeichnet, dass** ein neues Betriebssystem oder Betriebssystem-Abbild als neue Software auf dem Endgerät installiert wird.

11. Systemanordnung zum Sicherstellen einer Eignung eines auf einem Endgerät zu installierenden Softwareteils, umfassend:
- eine Entität, die so eingerichtet ist, dass sie eine Anforderungsspezifikation erzeugt (100), durch Bewerten (101) eines neuen Softwareteils hinsichtlich Einsatzanforderungen des Endgeräts;
- eine Schnittstellenentität, die so eingerichtet ist, dass sie die Anforderungsspezifikation an das Endgerät überträgt (102);
- eine Erfassungsentität, die so eingerichtet ist, dass sie tatsächliche Einsatzanforderungen auf dem Endgerät erfasst (103) und die übertragene (102) Anforderungsspezifikation mit den erfassten (103) tatsächlichen Einsatzanforderungen vergleicht (104); und
- eine Einsatzinstanz, die so eingerichtet ist, dass sie den neuen Softwareteil auf dem Endgerät einsetzt (105), falls festgestellt wird, dass die Anforderungsspezifikation die tatsächlichen Einsatzanforderungen erfüllt,
**dadurch gekennzeichnet, dass** eine aktuell auf dem Endgerät installierte Software eine obere Softwareschicht und eine untere Softwareschicht umfasst und
- die Entität so eingerichtet ist, dass sie eine Anforderungsspezifikation erzeugt (100), die konfiguriert ist, um Informationen zu bestimmen über Fähigkeiten, die der neue Softwareteil an die obere Softwareschicht bereitstellt, und/oder über Anforderungen des neuen Softwareteils für die untere Softwareschicht; und
- die Erfassungsentität so konfiguriert ist, dass sie bestimmt, dass das Erfassen (103) der tatsächlichen Einsatzanforderungen das Bestimmen von Informationen über Fähigkeiten, die die untere Softwareschicht an den neuen Softwareteil bereitstellt, und/oder über Anforderungen der oberen Softwareschicht für den neuen Softwareteil umfasst,
wobei die Schnittstellenentität so eingerichtet ist, dass sie das Übertragen (102) der Anforderungsspezifikation zusammen mit dem Übertragen des neuen Softwareteils an das Endgerät durchführt.

12. Systemanordnung nach Anspruch 11, **dadurch gekennzeichnet, dass** die Entitäten der Systemanordnung durch ein oder mehrere Computerprogrammprodukte realisiert sind, wobei die Erfassungsentität vorzugsweise durch eine auf dem Endgerät installierte Erfassungssoftware realisiert ist.

13. Computerprogrammprodukt, das so eingerichtet ist, dass es tatsächliche Einsatzanforderungen auf einem Endgerät als Erfassungsschritt eines Verfahrens nach einem der vorhergehenden Ansprüche 1 bis 10 erfasst, wenn es auf dem Endgerät installiert und von diesem ausgeführt wird.

## Revendications

1. Procédé de vérification d'une admissibilité d'un logiciel à installer sur un terminal, comprenant les étapes suivantes :
- la création (100) d'une spécification d'exigences par l'évaluation (101) d'un nouveau logiciel en ce qui concerne des exigences de déploiement du terminal ;
- la transmission (102) de ladite spécification d'exigences au terminal ;
- la détection (103) d'exigences de déploiement réelles sur le terminal et la comparaison (104) de la spécification d'exigences transmise (102) aux exigences de déploiement réelles détectées (103) ; et
- le déploiement (105) du nouveau logiciel sur le terminal dans le cas où il est déterminé que la spécification d'exigences est conforme aux exigences de déploiement réelles, **caractérisé en ce qu'**un logiciel couramment installé sur le terminal comprend une couche supérieure de logiciel et une couche inférieure de logiciel et
- la création (100) de la spécification d'exigences comprend la détermination d'informations relatives à des capacités que le nouveau logiciel fournit à la couche supérieure de logiciel et/ou relatives à des exigences du nouveau logiciel pour la couche inférieure de logiciel ; et
- la détection (103) des exigences de déploiement réelles comprend la détermination d'informations relatives à des capacités que la couche inférieure de logiciel fournit au nouveau logiciel et/ou relatives à des exigences de la couche supérieure de logiciel pour le nouveau logiciel,
- dans lequel la transmission (102) de ladite spécification d'exigences est réalisée avec la transmission du nouveau logiciel au terminal.

2. Procédé selon la revendication 1, **caractérisé en ce que**
la création (100) de la spécification d'exigences comprend la détermination d'informations relatives à des capacités que le nouveau logiciel fournit au terminal et/ou relatives à des exigences du nouveau logiciel pour le terminal ; et
la détection (103) des exigences de déploiement réelles comprend la détermination d'informations relatives à des capacités que le terminal fournit au nouveau logiciel et/ou relatives à des exigences du terminal pour le nouveau logiciel.

3. Procédé selon la revendication 1 ou 2, **caractérisé en ce que** la création (100) de la spécification d'exigences comprend la fourniture d'informations relatives au nouveau logiciel, et/ou relatives à des paquets Java Card dans le cas où le nouveau logiciel concerne un système d'exploitation Java Card, et/ou à une version du nouveau logiciel ou à une exigence de mémoire, et/ou à une carte de mémoire, et/ou à une version de format de données, et/ou à des informations de matériel et/ou à des informations de déploiement.

4. Procédé selon l'une quelconque des revendications précédentes, **caractérisé en ce que** les exigences de déploiement réelles sont détectées (103) par un logiciel de détection installé sur le terminal, dans lequel, de préférence, le logiciel de détection est intégré au système d'exploitation du terminal.

5. Procédé selon l'une quelconque des revendications précédentes, **caractérisé en ce que** le déploiement (105) du nouveau logiciel comprend la décompression d'un fichier image du nouveau logiciel, le contrôle de son intégrité, l'amendement de composants logiciels couramment installés, la mise à jour de composants logiciels couramment installés, l'échange de composants logiciels couramment installés, la suppression de composants logiciels couramment installés et/ou l'installation du nouveau logiciel sur le terminal.

6. Procédé selon l'une quelconque des revendications précédentes, **caractérisé en ce que** la spécification d'exigences est conforme aux exigences de déploiement réelles dans le cas où le nouveau système d'exploitation est compatible avec le système d'exploitation couramment installé et/ou avec le matériel du terminal.

7. Procédé selon l'une quelconque des revendications précédentes, **caractérisé en ce qu'**une conformité de la spécification d'exigences aux exigences de déploiement réelles est déterminée par l'évaluation d'une table indiquant des informations de compatibilité.

8. Procédé selon l'une quelconque des revendications précédentes, **caractérisé en ce que** le procédé est terminé dans le cas où la spécification d'exigences n'est pas conforme aux exigences de déploiement réelles.

9. Procédé selon l'une quelconque des revendications précédentes, **caractérisé en ce qu'**une admissibilité d'un logiciel est vérifiée pour son installation sur un téléphone mobile, un dispositif portatif, un terminal portable, une tablette informatique ou un notebook et/ou sur un terminal comprenant un élément inviolable.

10. Procédé selon l'une quelconque des revendications précédentes, **caractérisé en ce qu'**un nouveau système d'exploitation ou une nouvelle image de système d'exploitation est installé sur le terminal en tant que le nouveau logiciel.

11. Agencement de système pour vérifier une admissibilité d'un logiciel à installer sur un terminal, comprenant :
- une entité agencée pour créer (100) une spécification d'exigences par l'évaluation (101) d'un nouveau logiciel en ce qui concerne des exigences de déploiement du terminal ;
- une entité d'interface agencée pour transmettre (102) ladite spécification d'exigences au terminal ;
- une entité de détection agencée pour détecter (103) des exigences de déploiement réelles sur le terminal et comparer (104) la spécification d'exigences transmise (102) aux exigences de déploiement réelles détectées (103) ; et
- une entité de déploiement agencée pour déployer (105) le nouveau logiciel sur le terminal dans le cas où il est déterminé que la spécification d'exigences est conforme aux exigences de déploiement réelles, **caractérisé en ce qu'**un logiciel couramment installé sur le terminal comprend une couche supérieure de logiciel et une couche inférieure de logiciel et
- l'entité agencée pour créer (100) une spécification d'exigences est configurée pour déterminer des informations relatives à des capacités que le nouveau logiciel fournit à la couche supérieure de logiciel et/ou relatives à des exigences du nouveau logiciel pour la couche inférieure de logiciel ; et
- l'entité de détection est configurée pour détecter (103) les exigences de déploiement réelles par la détermination d'informations relatives à des capacités que la couche inférieure de logiciel fournit au nouveau logiciel et/ou relatives à des exigences de la couche supérieure de logiciel pour le nouveau logiciel,
dans lequel l'entité d'interface est agencée pour réaliser la transmission (102) de ladite spécification d'exigences avec la transmission du nouveau logiciel au terminal.

12. Agencement de système selon la revendication 11, **caractérisé en ce que** les entités de l'agencement de système sont mises en oeuvre par un ou plusieurs produits programmes informatiques, tandis que l'entité de détection est de préférence mise en oeuvre par un logiciel de détection installé sur le terminal.

13. Produit programme informatique agencé pour détecter des exigences de déploiement réelles sur un terminal en tant que l'étape de détection d'un procédé selon l'une quelconque des revendications 1 à 10, lorsqu'il est installé sur et exécuté par le terminal.
